# EUROPÄISCHE PATENTSCHRIFT

(11) **EP 3 469 672 B1**
(45) Veröffentlichungstag und Bekanntmachung des Hinweises auf die Patenterteilung: **25.11.2020**
(21) Anmeldenummer: 17742189.8
(22) Anmeldetag: 06.07.2017
(51) Int. Cl.: H02G 5/06

(54) **ISOLATOR**
INSULATOR
ISOLATEUR

(30) Priorität: 04.08.2016 DE 102016214408
(43) Veröffentlichungstag der Anmeldung: 17.04.2019
(73) Patentinhaber: Siemens Aktiengesellschaft, 80333 München (DE)
(72) Erfinder: MILEWSKI, Peter, 12355 Berlin (DE)
(86) Internationale Anmeldenummer: PCT/EP2017/067020
(87) Internationale Veröffentlichungsnummer: WO 2018/024441

(56) Entgegenhaltungen:
- EP-A1- 2 549 278
- DE-A1- 2 050 769
- DE-A1-102013 214 118
- JP-U- H0 176 128
- US-A- 5 670 767

## Beschreibung

Die Erfindung bezieht sich auf einen Isolator mit einem Flansch sowie mit einem ersten Flanschverstärkungselement, wobei das erste Flanschverstärkungselement und ein zweites Flanschverstärkungselement über eine Potentialausgleichseinrichtung elektrisch miteinander kontaktiert sind, wobei die Potentialausgleichseinrichtung eine Schirmfläche aufweist, wobei zumindest ein Flanschverstärkungselement zumindest teilweise im Schirmbereich der Schirmfläche angeordnet ist.

Aus dem Patent US 5,670,767 geht ein Isolator hervor, welcher einen Flansch aufweist. In dem Flansch ist ein Flanschverstärkungselement angeordnet, welches einer Aufnahme eines Bolzens dient. Das Flanschverstärkungselement wird von einer elektrisch leitenden Verbindung gebrückt, um einen Stromfluss durch das Flanschverstärkungselement zu unterbinden. Weiter ist vorgesehen, eine Ableitanordnung zu nutzen, um eine Überlastung des Isolators durch Überspannungen zu verhindern. So soll die dielektrische Festigkeit des Isolators dauerhaft erhalten bleiben. Die bekannte Konstruktion erweist sich als relativ aufwändig, da eine Vielzahl verschiedener Bauteile zu montieren ist.

Aus der Offenlegungsschrift DE 20 50 769 ist ein isolierender Abstandshalter bekannt, der einen ringförmigen Schirmungsabschnitt aufweist, wobei über radial fortragende leitfähige Abschnitte zylindrische Befestigungsteile positioniert sind. Aus der Offenlegungsschrift EP 2 549 278 A1 geht ein elektrisch isolierender Stützer hervor, in welchen eine optische Faser eingebettet ist. Die optische Faser ist von einer zylindrischen Schirmung umgeben, die über radial fortragende Erdungsleiter mit Verbindungsstücken verbunden ist. Aus dem japanischen Gebrauchsmuster JP 1-76128 geht eine Anordnung hervor, welche in einem Isolator verteilt mehrere schirmende Abschnitte aufweist, wobei zumindest ein Flanschverstärkungselement zumindest teilweise im Schirmbereich der Schirmfläche angeordnet ist.

Daher ergibt sich als Aufgabe der Erfindung, einen Isolator anzugeben, welcher bei einer vereinfachten Montage eine ausreichende dielektrische Festigkeit aufweist.

Erfindungsgemäß wird diese Aufgabe bei einem Isolator der eingangs genannten Art dadurch gelöst, dass die Schirmfläche konvex gekrümmt und im Flansch angeordnet ist, wobei der Schirmbereich der Schirmfläche auf der von der konvexen Seite abgewandten Rückseite der Potentialausgleichseinrichtung angeordnet ist und sich der Schirmbereich für einen zentralen, von dem Flansch umgriffenen Bereich des Isolators ergibt, und wobei zumindest ein Flanschverstärkungselement auf einer von der konvex gekrümmten Fläche abgewandten Rückseite im Schirmbereich der Schirmfläche angeordnet ist.

Ein Isolator dient einem elektrisch isolierten Beabstanden zweier voneinander abweichende elektrische Potentiale führenden Baugruppen. Ein Isolator weist dazu im Regelfall ein elektrisch isolierendes Material auf, welches Kräfte aufnehmen kann, um Baugruppen, welche die unterschiedlichen elektrischen Potentiale aufweisen, voneinander zu separieren. Der Isolator kann beispielsweise aus einem organischen Kunststoff, beispielsweise einem Gießharz, gefertigt werden, wobei zum Positionieren des Isolators ein Flansch am Isolator vorgesehen ist. Ein Flansch dient einem Bereitstellen einer definierten Anlagefläche am Isolator, um Kräfte in den Isolator einzuleiten und diese möglichst großflächig zu verteilen, um eine mechanische Überlastung des Isolators zu vermeiden. Als Flansch kann beispielsweise ein Ringflansch vorgesehen sein, der eine ringförmige Anlagefläche zur Verfügung stellen. Der Flansch kann bevorzugt zu einem Großteil durch das elektrisch isolierende Material des Isolators bereitgestellt werden. Mittels eines Flanschverstärkungselementes kann die mechanische Festigkeit des Flansches erhöht werden. Beispielsweise kann ein Flanschverstärkungselement in dem Isolator eingesetzt sein, so dass Anpresskräfte bzw. Ankoppelkräfte in das Flanschverstärkungselement eingeleitet werden können. Beispielsweise kann es sich bei dem Flanschverstärkungselement um einen Armaturkörper handeln, an dem beispielsweise eine Verbolzung vorgesehen sein kann. Das Flanschverstärkungselement kann beispielsweise eine Gewindeaufnahme aufweisen, in welche ein Bolzen, im Falle eines Innengewindes, oder eine Mutter, im Falle eines Außengewindes, ein- bzw. aufgesetzt werden kann, um einen winkelstarren Verbund zum Isolator auszubilden. Durch die Nutzung mehrerer Flanschverstärkungselemente ist die Möglichkeit gegeben, beispielsweise Kräfte an mehreren Flanschverstärkungselementen verteilt in den Isolator einzuleiten. Dabei können die Flanschverstärkungselemente bevorzugt der Positionierung einer Baugruppe dienen, welche ein elektrisches Potential führen soll. Wohingegen an einem weiteren Haltepunkt des Isolators eine weitere Baugruppe angeschlagen sein kann, welche elektrisch isoliert und beabstandet zu einer mit dem ersten bzw. zweiten Flanschverstärkungselement verbundenen Baugruppe positioniert sein soll. Beispielsweise können die Flanschverstärkungselemente, welche in dem Flansch angeordnet sein können, einer Anlage eines Erdpotential führenden Bauteiles, beispielsweise eines Rohres oder dergleichen, dienen. Der Isolator kann bevorzugt als scheibenförmiger Isolator ausgebildet sein, wobei am Umfang des scheibenförmigen Isolators der Flansch angeordnet ist. Der Flansch kann bevorzugt außenmantelseitig ringförmig umlaufen. Der Flansch kann bevorzugt zu einem Großteil aus elektrisch isolierendem Material gebildet sein. In dem vom Flansch umgriffenen Bereich kann/können dann beispielsweise zentrisch ein oder mehrere Phasenleiter, der/die ein elektrisches Potential abweichend vom Erdpotential führen soll(en), elektrisch isoliert gehalten sein/werden. Beispielsweise kann ein Phasenleiter einem Führen eines elektrischen Stromes, getrieben durch die Potentialdifferenz, dienen. Ein Phasenleiter kann umgriffen von dem Flansch den Isolator in axialer Richtung durchsetzen. Beispielsweise kann bei einer Ausgestaltung des Isolators als Scheibenisolator der Isolator stirnseitig an einem Rohr angeordnet sein und mit dem Rohr verflanscht sein. Das Rohr kann dabei elektrisch leitfähig oder elektrisch isolierend ausgebildet sein. Elektrisch leitfähige Teile des Rohres können bevorzugt Erdpotential führen. Das elektrische Potential, bevorzugt Erdpotential, kann auf die Flanschverstärkungselemente übertragen werden. Durch die Verwendung mehrerer Flanschverstärkungselemente, insbesondere mehrerer Flanschverstärkungselemente in einem Flansch des Isolators können Kräfte verteilt in den Isolator eingeleitet werden, so dass ein Verwindungsfreies Verspannen des Isolators ermöglicht wird. Damit wird der Isolator vor einem Brechen bzw. Reißen geschützt. Insbesondere bei der Verwendung von Gießharzen, die relativ spröde sind, kann so ein zuverlässiges elektrisches Isolieren durch den Isolator erzielt werden.

Mittels einer Potentialausgleichseinrichtung des Isolators ist es möglich, die Flanschverstärkungselemente miteinander galvanisch in Kontakt zu bringen. Durch die Kontaktierung der Flanschverstärkungselemente miteinander ist ein Verschleppen von elektrischen Potentialen an den Flanschverstärkungselementen verhindert. Die Flanschverstärkungselemente können bevorzugt elektrisch leitfähig sein, insbesondere können die Flanschverstärkungselemente aus einem Metall gebildet sein. Entsprechend ist mittels der Potentialausgleichseinrichtung sichergestellt, dass am Flansch zwischen zwei dort angeordneten Flanschverstärkungselementen eine Potentialverschleppung verhindert ist. Damit können die Flanschverstärkungselemente eine mechanische Stabilisierung des Isolators bewirken. Weiterhin können die Flanschverstärkungselemente eine dielektrische Stabilisierung des Isolators bewirken. Die Flanschverstärkungselemente können sich beispielsweise von einer Wandung des Flansches zu einer anderen Wandung des Flansches erstrecken und den Isolator durchsetzen. Durch eine galvanische Kontaktierung der Potentialausgleichselemente miteinander ist weiterhin sichergestellt, dass bei einer Potentialbeaufschlagung eines der Flanschverstärkungselemente das andere Flanschverstärkungselement dieselbe Potentialbeaufschlagung erfährt. Insbesondere während einer Montage des Isolators, beispielsweise bei einem Verflanschen desselben über den Flansch, können Situation entstehen, in denen zunächst nur eines der Flanschverstärkungselemente eine Verbindung und gegebenenfalls eine elektrische Kontaktierung erfährt, wohingegen das weitere Flanschverstärkungselement aufgrund des noch nicht abgeschlossenen Montagevorganges auf einem undefinierten (gegebenenfalls abweichenden) elektrischen Potential liegt. Durch die Verwendung der Potentialausgleichseinrichtung im Isolator ist dieser Gefahr entgegengetreten.

Vorteilhafterweise kann vorgesehen sein, dass zumindest eines der Flanschverstärkungselemente einen Abschnitt einer Anlagefläche des Flansches bildet.

Ein Flansch weist eine Anlagefläche auf, welche einer Anlage einer weiteren Baugruppe dient. Über die Anlagefläche können Kräfte von der anliegenden weiteren Baugruppe in den Flansch und umgekehrt eingeleitet werden. Dadurch ist über die Anlagefläche eines Flansches ein winkelstarrer Verbund z. B. ein kraftschlüssiger Verbund zu einer weiteren Baugruppe ermöglicht. Die weitere Baugruppe kann beispielsweise ein Gehäuse (Kapselungsgehäuse) einer Elektroenergieübertragungseinrichtung sein. Das Gehäuse kann beispielsweise zumindest abschnittsweise in Form eines Rohres bzw. eines Rohrstutzens ausgebildet werden, wobei der Isolator beispielsweise stirnseitig eine Mündungsöffnung des Rohres bzw. Rohrstutzens überspannend mit demselben verbunden ist. Durch die Ausbildung einer Anlagefläche des Flansches, zumindest teilweise durch eines der Flanschverstärkungselemente können Kräfte unmittelbar in das Flanschverstärkungselement eingeleitet und von dort fortgeleitet werden. Beispielsweise kann so eine Kraft von einer Seite des Isolators zu einer anderen Seite des Isolators geleitet werden, so dass ein Einklemmen bzw. ein Einsetzen des Flansches des Isolators zwischen zwei miteinander zu verspannende Rohrstutzen ermöglicht ist. Die Flanschverstärkungselemente können so Anpresskräfte aufnehmen und das Isoliermaterial schützen. Dazu kann eine axiale Kraftbeaufschlagung am Isolator vorgenommen werden, wodurch ein mechanischer Verbund des Isolators mit einem Rohr bzw. einem Rohrstutzen vorgenommen werden kann. Weiterhin besteht durch die Anordnung des Flanschverstärkungselementes in der Anlagefläche die Möglichkeit, eine elektrische Kontaktierung dieses Flanschverstärkungselementes vorzunehmen, wobei über die Potentialausgleichseinrichtung weitere Verstärkungselemente mit demselben elektrischen Potential beaufschlagt werden können. Damit ist vorteilhaft eine elektrische Kontaktierung bzw. Potentialbeaufschlagung der Potentialausgleichseinrichtung über das Flanschverstärkungselement ermöglicht. Dadurch sind zusätzliche Anschlussfahnen oder ähnliches vermieden, um eine Beaufschlagung der Potentialausgleichseinrichtung, beispielsweise mit Erdpotential, vorzunehmen. Beispielsweise kann vorgesehen sein, dass ein Flanschverstärkungselement in einen Isolator eingesetzt wird, wobei zur Ausbildung einer Anlagefläche eine abbrasive Bearbeitung des Flansches vorgenommen werden kann, so dass ein sprungfreier Übergang des Flanschverstärkungselementes in die Anlagefläche ermöglicht und eine plane Anlagefläche gebildet durch Flansch sowie Flanschverstärkungselement gegeben ist. Dadurch ist auch eine günstige Krafteinleitung sowohl in den Isolator als auch in das Flanschverstärkungselement gegeben. Weiterhin ist die Möglichkeit gegeben, einen fluiddichten Verbund am Flansch auszubilden.

Die Potentialausgleichseinrichtung weist eine Schirmfläche auf, wobei zumindest ein Flanschverstärkungselement zumindest teilweise im Schirmbereich der Schirmfläche angeordnet ist.

Die Potentialausgleichseinrichtung dient als Schirmelektrode, um eine Homogenisierung von elektrischen Feldern am bzw. um den Isolator herum zu organisieren. Dazu weist die Potentialausgleichseinrichtung eine Schirmfläche auf. Bevorzugt kann sich die Schirmfläche quer zu einer Anlagefläche erstrecken. Anpresskräfte auf die Anlagefläche können im Wesentlichen lotrecht zu einer Flächennormalen der Schirmfläche liegen. Die Schirmfläche ist konvex gekrümmt ausgebildet, wobei zumindest ein Flanschverstärkungselement auf einer von der konvex gekrümmten Fläche abgewandten, insbesondere konkav gekrümmten, Rückseite angeordnet ist. Eine konvex gekrümmte Schirmfläche kann Teil einer Kreiszylindermantelfläche sein. Durch eine Anordnung einer Schirmfläche in einem Flansch ergibt sich ein Schirmbereich für einen zentralen, von dem Flansch umgriffenen Bereich des Isolators. Eine konvexe Krümmung kann sich auch durch ein Zusammenwirken mehrerer ebener, zueinander gekippter Flächen ergeben. Ein Flanschverstärkungselement kann auch außerhalb des Schirmbereiches angeordnet sein. Auf der von der konvexen Seite abgewandten Rückseite der Potentialausgleichseinrichtung, also im Schirmbereich der Schirmfläche, ist zumindest eines der Flanschverstärkungselemente angeordnet. Dadurch wird eine dielektrische Schirmung des Flanschverstärkungselementes bewirkt. Entsprechend können kostengünstige Fertigungsverfahren genutzt werden, um eines oder mehrere Flanschverstärkungselement in einen Flansch einzusetzen. Vorteilhaft kann vorgesehen sein, dass ein Flanschverstärkungselement unmittelbar mit der Rückseite der Schirmfläche in Kontakt steht, so dass eine vereinfachte Kontaktierung von Potentialausgleichseinrichtung und Flanschverstärkungselement gegeben ist. Weiterhin ist so eine effektive Schirmung des Kontaktierungsbereiches eines Flanschverstärkungselementes mit der Potentialausgleichseinrichtung gegeben. Eine elektrische Kontaktierung von Potentialausgleichseinrichtung und Flanschverstärkungselement kann beispielsweise stoffschlüssig, beispielsweise durch Löten oder Schweißen, kraftschlüssig, beispielsweise durch Nieten, Schrauben oder formschlüssig, beispielsweise durch einen Rastverbund, erfolgen. Die elektrische Kontaktierung bzw. der Bereich der elektrischen Kontaktierung sollte dabei von dem Isoliermaterial des Isolators umschlossen sein, so dass einerseits eine mechanische Stabilisierung des Verbundes gegeben ist, andererseits auch eine Barriere vor chemischen Einflüssen vorhanden ist, so dass ein dauerhafter elektrisch leitender Verbund zwischen Potentialausgleichseinrichtung und Flanschverstärkungselement gegeben ist.

Eine weitere vorteilhafte Ausgestaltung kann vorsehen, dass die Potentialausgleichseinrichtung nach Art eines Ringes geformt ist.

Eine Ringform weist eine dielektrisch günstige Gestalt auf, so dass die Potentialausgleichseinrichtung einerseits einer elektrischen Kontaktierung eines Flanschverstärkungselementes dienen kann, andererseits jedoch auch eine dielektrisch schirmende Wirkung an dem Isolator ausbildet. Dabei kann der Ring verschiedenartig aufgebaut sein. Der Ring kann beispielsweise aus mehreren Segmenten zusammengesetzt sein, wobei der Ring nicht vollständig in sich geschlossen umlaufen muss. Es kann auch sein, dass der Ring Durchbrechungen aufweist, um beispielsweise eine verbesserte Integration des Ringes in einen Isolator zu erzielen. Insbesondere kann der Ring im Bereich des Flansches des Isolators angeordnet sein, wodurch am äußeren Umfang des Flansches eine dielektrische Schirmung über die Potentialausgleichseinrichtung ermöglicht ist. Der Ring kann beispielsweise aus mehreren Ringsegmenten zusammengesetzt sein, wobei die Ringsegmente in ihrer Schirmwirkung eine in sich geschlossen kreisförmige Schirmung hervorrufen. Der Ring kann beispielsweise aus kreisförmigen gebogenen Rundstählen aufgebaut sein, wobei auch mehrere Teilelemente in axialer Richtung benachbart eine Verbesserung der Schirmwirkung der Potentialausgleichseinrichtung bewirken können.

Eine weitere vorteilhafte Ausgestaltung kann vorsehen, dass der Ring unter Veränderung seines Umfanges elastisch verformbar ist.

Insbesondere durch eine Unterbrechung der Ringstruktur der Potentialausgleichseinrichtung kann eine elastische Verformbarkeit des Ringes erzielt werden. Dadurch kann insbesondere bei Temperaturschwankungen ein Ausgleich von Dehnungsdifferenzen unterschiedlicher Materialien vorgenommen werden. Weiterhin kann der Ring unter Vorspannung montiert werden, so dass ein spaltfreier Übergang zwischen Ring und Isolator ermöglicht ist. Der Ring kann beispielsweise aus einem profilierten Material gebildet sein. Weiterhin kann die Elastizität unterstützt werden, indem der Ring Durchbrechungen aufweist, welche Kompensationsmöglichkeiten für Wärmedehnungen ermöglichen.

Weiterhin kann vorteilhaft vorgesehen sein, dass ein Flanschverstärkungselement außerhalb der vom Ring umgriffenen Zone angeordnet ist.

Ein Flanschverstärkungselement bzw. mehrere Flanschverstärkungselemente sollten bevorzugt innerhalb der von dem Ring umgriffenen Zone angeordnet sein. Dadurch sind diese Flanschverstärkungselemente elektrisch geschirmt positioniert. Es kann jedoch auch vorgesehen sein, dass ein Flanschverstärkungselement außerhalb der umgriffenen Zone angeordnet ist. Auch in diesem Falle sollte eine elektrische Kontaktierung des außerhalb der umgriffenen Zone angeordneten Flanschverstärkungselementes mit der Potentialausgleichseinrichtung erfolgen. Dadurch ist einerseits die Möglichkeit gegeben, beispielsweise auf einer Kreisbahn verteilt, mehrere Flanschverstärkungselemente am Isolator anzuordnen und zusätzlich strahlenförmig von der Kreisbahn fortragend mehrere oder zumindest einen Zweig des Isolators mit Flanschverstärkungselement zu positionieren. Dadurch besteht die Möglichkeit, die innerhalb der umgriffenen Zone angeordneten Flanschverstärkungselemente zu nutzen, um eine Kraftwirkung und ein Verspannen des Isolators, beispielsweise in einer Flanschverbindung, vorzunehmen, wobei ein außerhalb der umgriffenen Zone angeordnetes Flanschverstärkungselement an dieser Verspannung nicht beteiligt sein muss. Dadurch besteht die Möglichkeit, auch außerhalb des Flanschverbundes eine elektrische Kontaktierung der Potentialausgleichseinrichtung vorzunehmen.

Eine weitere vorteilhafte Ausgestaltung kann vorsehen, dass die Potentialausgleichseinrichtung ein Band ist.

Eine bandförmige Potentialausgleichseinrichtung kann beispielsweise durch ein Wickeln eines elektrisch leitfähigen Materials gebildet werden, welches einen geschlossenen Umlauf bildet. Ein Band kann beispielsweise durch einen elektrisch leitfähigen Streifen gebildet werden, welcher gebogen wird. Beispielsweise kann das Band den Verlauf des Flansches, insbesondere bei einem kreisringförmigen Verlauf des Flansches, folgen. Durch die Verwendung eines Bandes ist die Schirmwirkung der Potentialausgleichseinrichtung in radialer Richtung verbessert. Durch das Band können mehrere Flanschverstärkungselemente quasi kettenartig miteinander elektrisch kontaktiert werden.

Das Band kann beispielsweise annähernd die Breite des Flansches des Isolators in axialer Richtung aufweisen, wobei in radialer Richtung der Flansch nahezu vollständig dielektrisch geschirmt ist. Unter Nutzung von elektrisch leitfähigen Rohren bzw. Rohrstutzen, die miteinander verflanscht werden, wobei der Flansch in eine Flanschverbindung eingesetzt wird, kann so eine elektrisch leitfähige und damit dielektrisch schirmende Außenkontur auch bei eingelegtem Isolator in eine Flanschverbindung ausgebildet werden.

Eine weitere vorteilhafte Ausgestaltung kann vorsehen, dass das Band perforiert, insbesondere ein Netzband ist.

Eine Perforation des Bandes reduziert zum einen die Masse der Potentialausgleichseinrichtung. Zum anderen sollte die Perforation derart gewählt werden, dass die Schirmwirkung der Potentialausgleichseinrichtung nur unwesentlich beeinflusst wird. Zusätzlich kann durch eine Perforation die Elastizität der Potentialausgleichseinrichtung verbessert werden. beispielsweise kann die Perforation der Potentialausgleichseinrichtung von elektrisch isolierendem Material, insbesondere dem Material des Isolators, durchsetzt sein. Ein Netzband kann beispielsweise durch Streckmetall gebildet werden, wodurch eine hohe Durchlässigkeit der Potentialausgleichseinrichtung bei geringer Masse und hoher Schirmwirkung erzielt wird. Zusätzlich weist ein Netzband den Vorteil auf, dass dieses eine hohe Elastizität aufweist.

Eine weitere vorteilhafte Ausgestaltung kann vorsehen, dass zumindest ein Flanschverstärkungselement eine Ausnehmung in dem Isolator auskleidet.

Eine Ausnehmung kann sich in den Isolator hinein erstrecken. Insbesondere kann die Ausnehmung den Isolator vollständig durchsetzen, so dass eine Durchgangsöffnung in dem Isolator gebildet ist. Insbesondere kann der Flansch von der Ausnehmung vollständig durchsetzt sein, so dass durch den Flansch hindurch Verbolzungen vorgenommen werden können. Das Flanschverstärkungselement kann eine Ausnehmung auskleiden, so dass die Ausnehmung vor mechanischen Beanspruchungen geschützt ist. Beispielsweise kann ein Einführen von Bolzen in eine Ausnehmung zu mechanischen Belastungen der Oberfläche der Ausnehmung führen. Das Flanschverstärkungselement schützt die Ausnehmung insbesondere, wenn das Flanschverstärkungselement einen Gewindegang aufweist, so dass Kräfte in den Isolator eingeleitet werden können.

Weiterhin kann vorteilhaft vorgesehen sein, dass zumindest ein Flanschverstärkungselement eine Hülse ist.

Eine Hülse kann in sich geschlossen nach Art eines Rohrstutzens ausgebildet sein. Eine Hülse kann durch einfaches Ablängen eines Halbzeuges gebildet werden. Bevorzugt kann die Hülse eine hohlzylindrische Gestalt mit kreisringförmigem Querschnitt aufweisen. Die Hülse kann weiter mit einem Gewindegang versehen sein, so dass Schraubverbindungen unmittelbar in die Hülse eingreifen können und ein kraftschlüssiger Verbund zwischen Isolator und einer weiteren Baugruppe hergestellt werden kann.

Vorteilhafterweise kann weiter vorgesehen sein, dass die Potentialausgleichseinrichtung vollständig in dem Isolator eingebettet ist.

Durch ein vollständiges Einbetten der Potentialausgleichseinrichtung ist die Potentialausgleichseinrichtung chemisch und mechanisch durch das elektrisch isolierende Material des Isolators geschützt. Über eine elektrische Kontaktierung mit einem Flanschverstärkungselement ist eine elektrische Kontaktierung der Potentialausgleichseinrichtung auch bei vollständiger Einbettung derselben ermöglicht. Insbesondere bei Ausbildung der Potentialausgleichseinrichtung als perforiertes Band kann diese beispielsweise bei einem Gießen des Isolators unter Nutzung eines flüssigen Isoliermaterials während der Formgebung des Isolators in denselben eingebettet werden. Bevorzugt erfolgt das Einbetten der Potentialausgleichseinrichtung im Bereich des Flansches, wodurch bevorzugt in radialer Richtung eine Schirmwirkung der Potentialausgleichseinrichtung erzielbar ist. In einer Anlagefläche des Flansches sollte die Potentialausgleichseinrichtung bevorzugt keine Flächenanteile bilden. Dazu ist die Potentialausgleichseinrichtung hinter die Anlagefläche zurückgezogen in den Flansch eingebettet. Dadurch wird die Anlagefläche von unnötigen Einschlüssen freigehalten. Bevorzugt kann die Anlagefläche durch das Isoliermaterial des Isolators sowie durch zumindest ein oder mehrere Verstärkungselement(e) gebildet sein. Bei einer Ausbildung des Verstärkungselementes als Hülse, kann die Hülse beispielsweise stirnseitig bündig in einer Anlagefläche des Flansches eingesetzt sein. Die Hülse kann beispielsweise zwei gegensinnig ausgerichtete Anlageflächen des Flansches verbinden und den Flansch vollständig durchsetzen.

Vorteilhafterweise kann vorgesehen sein, dass die Potentialausgleichseinrichtung über ein Flanschverstärkungselement kontaktierbar ist.

Eine elektrische Kontaktierung der Potentialausgleichseinrichtung über ein Flanschverstärkungselement ermöglicht bereits während einer Montage des Isolators eine elektrische Kontaktierung der Potentialausgleichseinrichtung. Entsprechend sind zusätzliche Kontaktierungen bzw. Anschlussfahnen an dem Isolator für die Potentialausgleichseinrichtung nicht nötig.

Bei einem Nutzen mehrerer Flanschverstärkungselemente können diese über die Potentialausgleichseinrichtung miteinander elektrisch kontaktiert werden. Selbst wenn eine der Kontaktierungsstellen am Flanschverstärkungselement einen erhöhten Übergangswiderstand aufweist, kann dies über die Potentialausgleichseinrichtung und weitere Flanschverstärkungselemente kompensiert werden.

Eine weitere Aufgabe ist es, eine Elektroenergieübertragungseinrichtung anzugeben, welche vorteilhaft einen erfindungsgemäßen Isolator nutzt. Erfindungsgemäß wird ein erfindungsgemäßer Isolator wie vorgehend beschrieben in einer Elektroenergieübertragungseinrichtung mit einem Kapselungsgehäuse sowie mit einer Flanschverbindung in die Flanschverbindung eingespannt.

Eine Elektroenergieübertragungseinrichtung dient einer Übertragung eines elektrischen Stromes, wobei der elektrische Strom in einem Phasenleiter geführt ist. Der Phasenleiter wird dazu elektrisch isoliert gehalten. Zum elektrisch isolierten Halten des Phasenleiters wird ein erfindungsgemäßer Isolator eingesetzt. Der Isolator ist dabei beispielsweise scheibenförmig ausgebildet und von dem Phasenleiter durchsetzt. Zur Positionierung des von dem Phasenleiter durchsetzten Isolators ist der Isolator in eine Flanschverbindung eingespannt. Bevorzugt kann dazu der Flansch des Isolators mit einem Rohr bzw. einem Rohrstutzen verbunden sein, wobei der Isolator eine Mündungsöffnung des Rohrstutzens überspannt. Bevorzugt können zwei gegensinnig ausgerichtete Rohrstutzen miteinander verspannt werden, wobei im Fügespalt der Rohrstutzen der Isolator positioniert ist. Der Isolator kann einen fluiddichten Verschluss einer Mündungsöffnung eines Rohrstutzens bewirken.

Weiter kann vorteilhaft vorgesehen sein, dass das Kapselungsgehäuse mit einem elektrisch isolierenden Fluid befüllt ist.

Das Kapselungsgehäuse kann mit einem elektrisch isolierenden Fluid, beispielsweise gasförmig oder flüssig, befüllt sein. Dabei kann der Phasenleiter von dem elektrisch isolierenden Fluid umspült sein, wobei eine elektrische Isolation des Phasenleiters gegenüber dem Kapselungsgehäuse durch das elektrisch isolierende Fluid realisiert ist. Das Kapselungsgehäuse ist dazu fluiddicht auszubilden, gegebenenfalls kann der Isolator einen fluiddichten Verschluss des Kapselungsgehäuses bewirken. Als Fluide eignen sich elektronegative Medien wie beispielsweise fluorhaltige Stoffe wie Schwefelhexafluorid, Fluorketone, Fluornitrile usw. Es können jedoch auch Stickstoff oder kohlendioxidbasierte Fluidgemische Verwendung finden. Bevorzugt kann das Kapselungsgehäuse ein Druckbehälter sein, so dass das Fluid unter Überdruck im Inneren des Kapselungsgehäuses eingeschlossen sein kann.

Im Folgenden wird ein Ausführungsbeispiel der Erfindung schematisch in einer Zeichnung gezeigt und nachfolgend näher beschrieben. Dabei zeigt die
- Figur 1: eine Elektroenergieübertragungseinrichtung mit einem Isolator im Querschnitt; die
- Figur 2: den aus der Figur 1 bekannten Isolator in einer perspektivischen Ansicht teilweise freigeschnitten; die
- Figur 3: eine alternative Ausgestaltungsvariante des aus den Figuren 1 und 2 bekannten Isolators und die
- Figur 4: eine weitere Ausgestaltungsvariante des aus den Figuren 1 und 2 bekannten Isolators.

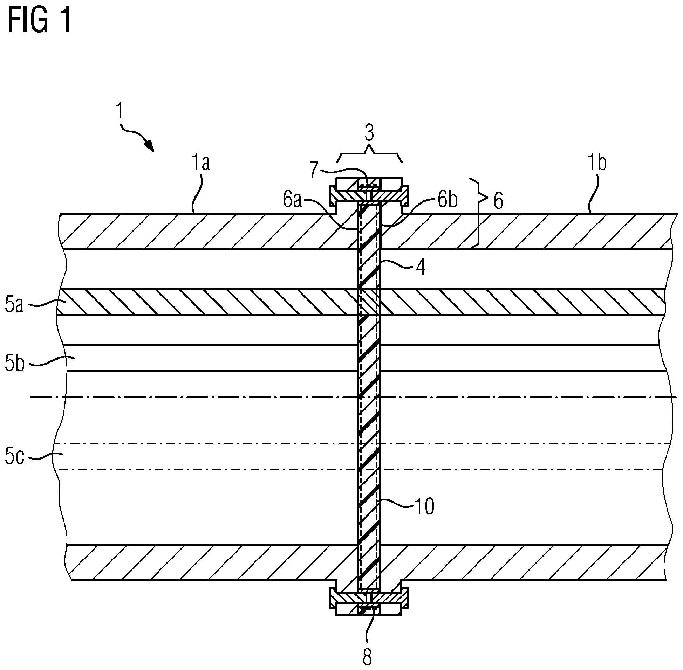

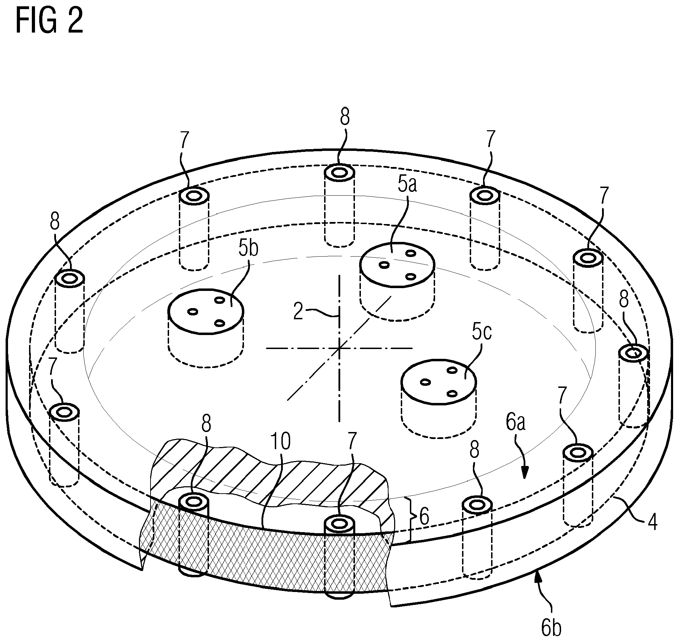

Die in der Figur 1 gezeigte Elektroenergieübertragungseinrichtung weist ein Kapselungsgehäuse 1 auf. Das Kapselungsgehäuse 1 weist einen ersten Rohrstutzen 1a sowie einen zweiten Rohrstutzen 1b auf. Die beiden Rohrstutzen 1a und 1b weisen im Wesentlichen einen kreisringförmigen Querschnitt auf und sind koaxial zu einer Längsachse 2 ausgerichtet. Die beiden Rohrstutzen 1a, 1b sind mit einander zugewandten Stirnseiten über eine Flanschverbindung 3 miteinander verflanscht. In den Fügespalt der Flanschverbindung 3 ist ein Isolator 4 eingesetzt. Der Isolator 4 verschließt stirnseitig die einander zugewandten Enden des ersten sowie zweiten Rohrstutzens 1a, 1b. Im Inneren des Kapselungsgehäuses 1 sind Phasenleiter 5a, 5b, 5c angeordnet. Die Phasenleiter 5a, 5b, 5c sind in einer so genannten Dreieckskonfiguration symmetrisch um die Längsachse 2 verteilt angeordnet (vgl. Figur 2). Die Phasenleiter 5a, 5b, 5c durchsetzen den Isolator 4. Um eine vereinfachte Montage zu erzielen, sind die Phasenleiter 5a, 5b, 5c in verschiedene Segmente unterteilt, die jeweils miteinander verschraubt sind. Dabei sind die Segmente der Phasenleiter 5a, 5b, 5c, welche den Isolator 4 durchsetzen, fluiddicht in den Isolator 4 eingebettet. Stirnseitig an die eingebetteten Segmente schließen sich dann weitere Segmente der Phasenleiter 5a, 5b, 5c an. Dadurch sind die Phasenleiter 5a, 5b, 5c beabstandet gegenüber dem Kapselungsgehäuse 1 über den Isolator 4 gehalten.

Der Isolator 4 ist als scheibenförmiger Isolator ausgebildet, wobei der Durchmesser des scheibenförmigen Isolators 4 dem Durchmesser der Flanschverbindung 3 entspricht. An seinem äußeren Umfang ist der Isolator 4 mit einem Flansch 6 ausgestattet. Der Flansch 6 weist eine erste Anlagefläche 6a sowie eine zweite Anlagefläche 6b auf. Mit den Anlageflächen 6a, 6b liegt der Flansch 6 an gegengleichen Flächen des ersten bzw. zweiten Rohrstutzens 1a, 1b an. Die Anlagenflächen 6a, 6b weisen jeweils einen kreisringförmigen Querschnitt auf und sind gegensinnig und koaxial an dem Isolator 4 angeordnet.

Am Umfang verteilt in dem Flansch 6 des Isolators 4 sind ein erstes Flanschverstärkungselement 7 sowie ein zweites Flanschverstärkungselement 8 angeordnet. Die beiden Flanschverstärkungselemente 7, 8 liegen in der Schnittebene der Figur 1. Neben den in der Figur 1 gezeigten Flanschverstärkungselementen 7, 8 sind auf einem Kreisumlauf in dem Flansch 6 weitere Flanschverstärkungselemente 7, 8 angeordnet (vgl. Figur 2). Die Flanschverstärkungselemente 7, 8 sind jeweils gleichartig aufgebaut. Vorliegend sind die Flanschverstärkungselemente 7, 8 in Hülsenform ausgebildet, d. h. sie weisen einen kreisringförmigen Querschnitt auf und bilden im Wesentlichen einen Hohlzylinder aus. Innenmantelfläche und/oder Außenmantelfläche der Flanschverstärkungselemente 7, 8 können eine Profilierung aufweisen. Stirnseiten der Flanschverstärkungselemente 7, 8 liegen bündig in den Anlageflächen 6a, 6b des Flansches 6. Die Flanschverstärkungselemente 7, 8 umgreifen als Armaturelemente Bolzen 9, welche die Flanschverbindung 3 sichern und Anpresskräfte aufbringen. Als solches sind die Flanschverstärkungselemente 7, 8 innenwändig mit einem Gewindegang ausgestattet, in welchem die Bolzen 9 einschraubbar sind. Dadurch ist es möglich unter Nutzung der Flanschverstärkungselemente 7, 8 die Flanschverbindung 3 unter Zwischenlage des Isolators 4 zu verspannen. Als Isoliermaterial für den Isolator eignen sich elektrisch isolierende Stoffe wie Porzellane, Keramiken, organische Kunststoffe. Bevorzugt können Harze Verwendung finden, welche in einem Gussverfahren einer Formgebung zur Ausbildung des Isolators 4 unterzogen werden.

In den Isolator 4 ist eine Potentialausgleichseinrichtung 10 vollständig eingebettet. Die Potentialausgleichseinrichtung 10 ist vorliegend nach Art eines Bandes ausgebildet, wobei das Band in sich geschlossen um die Längsachse 2 umläuft, und innerhalb des Isolators 4 einen Ring bildet. Dabei ist die Bandbreite derart gewählt, dass nahezu die gesamte axiale Stärke des Isolators 4 (Höhe des Flansches 6) von der Potentialausgleichseinrichtung 10 überdeckt ist. Bevorzugt ist die Potentialausgleichseinrichtung 10 vollständig innerhalb des Isolators 4 angeordnet. Die Potentialausgleichseinrichtung 10 umgreift dabei die Phasenleiter 5a, 5b, 5c sowie das erste sowie das zweite Flanschverstärkungselement 7, 8. Aufgrund der Ringform und der bandartigen Struktur der Potentialausgleichseinrichtung 10 ist eine konvex gekrümmte Schirmfläche gebildet, welche im Bereich des Flansches 6, genauer gesagt im Bereich des äußeren Umfanges des Flansches 6, umläuft. Auf der von der konvexen Seite abgewandten, hier konkav gekrümmten Rückseite sind die Flanschverstärkungselement 7, 8 angeordnet. Dabei sind die Mantelflächen der Flanschverstärkungselemente 7, 8 in unmittelbarer Berührung mit der Potentialausgleichseinrichtung 10. Die Ringachse der Potentialausgleichseinrichtung 10 sowie die Achsen der hülsenförmigen Flanschverstärkungselemente 7, 8 sind dabei parallel ausgerichtet, so dass in der Außenmantelfläche der Flanschverstärkungselemente 7, 8 eine im Wesentlichen linienförmige Kontaktierung zwischen der Potentialausgleichseinrichtung 10 sowie den Flanschverstärkungselementen 7, 8 gegeben ist.

Die Stirnseiten der Flanschverstärkungselemente 7, 8 liegen in den Anlageflächen 6a, 6b des Flansches 6 des Isolators 4. Dabei liegen diese bündig in den Anlageflächen 6a, 6b. Über die bevorzugt elektrisch leitfähig ausgebildeten Rohrstutzen 1a, 1b ist eine elektrische Kontaktierung und damit eine Beaufschlagung der Flanschverstärkungselemente 7, 8 mit dem Potential ermöglicht, welche das Kapselungsgehäuse 1 führt. Über die elektrische Kontaktierung der Potentialausgleichseinrichtung 10 sind zusätzlich die Flanschverstärkungselemente 7, 8 miteinander galvanisch kontaktiert. Dadurch besteht die Möglichkeit, auch bei einem zeitlich aufeinander folgenden Anschrauben der Bolzen ein sofortiges gemeinsames elektrisches Kontaktieren der Flanschverstärkungselemente 7, 8 zu erzielen und eine Potentialverschleppung bereits während der Montage zu verhindern.

Die Figur 2 zeigt eine perspektivische Ansicht des Isolators 4 wie aus der Figur 1 bekannt. Der Isolator 4 ist hier in einer perspektivischen Ansicht gezeigt, wobei eine Vielzahl von Flanschverstärkungselementen 7, 8, welche auf einer Kreisbahn umlaufend um die Längsachse 2 angeordnet sind, sichtbar ist. Die Phasenleiter 5a, 5b, 5c sind fluiddicht in den Isolator 4 eingebettet und durchsetzen diesen in Richtung der Längsachse 2. Die Phasenleiter 5a, 5b, 5c sind dabei in einer Dreiecksanordnung angeordnet. Im Umlauf des Flansches 6 ist eine Vielzahl von Flanschverstärkungselementen 7, 8 angeordnet. Die Flanschverstärkungselemente 7, 8 befinden sich auf einer Kreisbahn, welche koaxial zur Längsachse 2 ausgerichtet ist. Die Flanschverstärkungselemente 7, 8 sind außenseitig von der Potentialausgleichseinrichtung 10 umgriffen. Vorliegend ist die Potentialausgleichseinrichtung 10 nach Art eines Bandes ausgebildet, welches als aus einem Streckmetall gebildet ist. Dadurch sind elastisch verformbare Perforationen in der Potentialausgleichseinrichtung 10 gebildet, wodurch eine elastische Verformung in begrenztem Maße möglich ist.

Um eine elektrische Kontaktierung von Potentialausgleichseinrichtung 10 sowie den Flanschverstärkungselementen 7, 8 zu erzielen, sind die Flanschverstärkungselemente 7, 8 vorliegend mit der Potentialausgleichseinrichtung 10 punktverschweißt, so dass eine dauerhafte elektrische Kontaktierung gegeben ist.

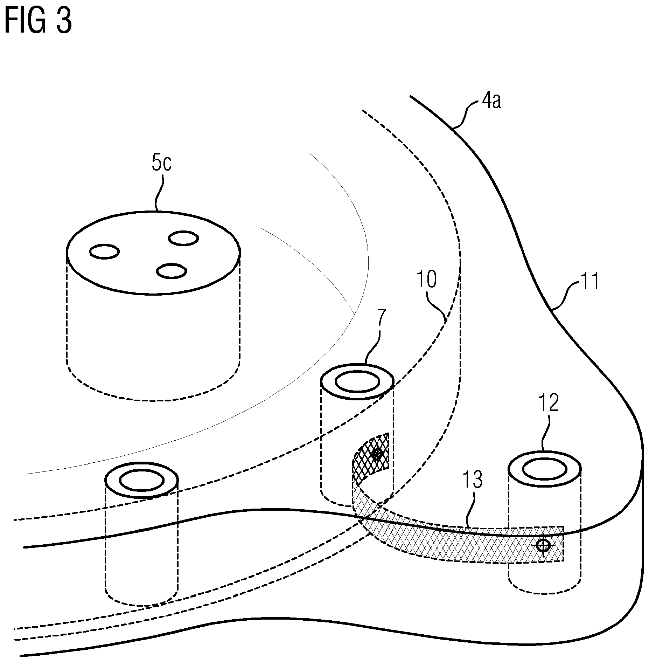

Die Figur 3 zeigt eine alternative Ausgestaltungsvariante eines Isolators 4a, welcher grundsätzlich den gleichen Aufbau wie aus den Figuren 1 und 2 bekannt aufweist. Radial vorspringend ist jedoch außenmantelseitig die Anformung von Streben 11 am Isolator vorgesehen. Die Anzahl der Streben 11 kann variieren, beispielsweise kann eine symmetrische Verteilung von vier Streben am Umfang der Ausgestaltungsvariante eines Isolators 4a vorgesehen sein. Dadurch ist bei einem Einbau der Ausgestaltungsvariante eines Isolators 4a in die bekannte Flanschverbindung nach Figur 1 die Möglichkeit gegeben, am Umfang des Flansches 6 der Ausgestaltungsvariante eines Isolators 4a einen Zugang zu einem weiteren Flanschverstärkungselement 12 zu erlangen. Die Höhe der Strebe 11 kann der Höhe des Flansches 6 entsprechen. Das weitere Flanschverstärkungselement 12 ist dabei vor der konvex gekrümmten Schirmfläche der Potentialausgleichseinrichtung 10 angeordnet. Somit befindet sich das weitere Flanschverstärkungselement 12 außerhalb des Schirmbereiches der Potentialausgleichseinrichtung 10. Über einen Zweig 13, welcher mit der Potentialausgleichseinrichtung 10 verbunden ist, ist eine elektrische Kontaktierung des weiteren Flanschverstärkungselementes 12 ermöglicht. Die radial vorspringende Strebe 11 kann so beispielsweise genutzt werden, um eine Beaufschlagung der Potentialausgleichseinrichtung 10 sowie der Flanschverstärkungselemente 7, 8, 12 mit einem bestimmten elektrischen Potential zu dienen oder beispielsweise einen Messabgriff zur Verfügung zu stellen. Des Weiteren kann die Strebe 11 auch genutzt werden, um eine mechanische Verstrebung bzw. Stabilisierung, Abfangung, Halterung usw. der Flanschverbindung 3 vorzunehmen.

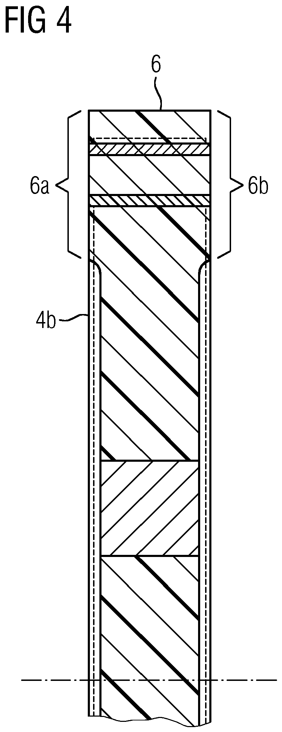

Die Figur 4 zeigt eine weitere Ausgestaltungsvariante eines Isolators 4b. Zur Definition der ringförmigen Anlageflächen 6a, 6b des Flansches 6 an der weiteren Ausgestaltungsvariante eines Isolators 4b ist der von dem Flansch 6 umgriffene zentrale Bereich mit einer reduzierten Höhe ausgestattet, so dass eine definierte Lage eines Tripelpunktes zwischen Isolator, Fluidisolation sowie Flanschverbindung 3 gegeben ist. Analog zu den Figuren 1, 2 und 3 ist auch hier die Verwendung von Flanschverstärkungselementen 7, 8 sowie einer Potentialausgleichseinrichtung 10 vorgesehen. Die in den Figuren 1, 2, 3 und 4 gezeigten Merkmale können untereinander kombiniert werden.

## Patentansprüche

1. Isolator (4, 4a, 4b) mit einem Flansch (6) sowie mit einem ersten Flanschverstärkungselement (7), wobei das erste Flanschverstärkungselement (7) und ein zweites Flanschverstärkungselement (8) über eine Potentialausgleichseinrichtung (10) elektrisch miteinander kontaktiert sind, wobei die Potentialausgleichseinrichtung (10) eine Schirmfläche aufweist, wobei zumindest ein Flanschverstärkungselement (7, 8) zumindest teilweise im Schirmbereich der Schirmfläche angeordnet ist, **dadurch gekennzeichnet, dass** die Schirmfläche konvex gekrümmt und im Flansch (6) angeordnet ist, wobei der Schirmbereich der Schirmfläche auf der von der konvexen Seite abgewandten Rückseite der Potentialausgleichseinrichtung (10) angeordnet ist und sich der Schirmbereich für einen zentralen, von dem Flansch (6) umgriffenen Bereich des Isolators (4, 4a, 4b) ergibt, und wobei zumindest ein Flanschverstärkungselement (7, 8) auf einer von der konvex gekrümmten Fläche abgewandten Rückseite im Schirmbereich der Schirmfläche angeordnet ist.

2. Isolator (4, 4a, 4b) nach Anspruch 1,
**dadurch gekennzeichnet dass** zumindest eines der Flanschverstärkungselemente (7, 8) einen Abschnitt einer Anlagefläche (6a, 6b) des Flansches (6) bildet.

3. Isolator (4, 4a, 4b) nach einem der Ansprüche 1 bis 2,
**dadurch gekennzeichnet dass** die Potentialausgleichseinrichtung (10) nach Art eines Ringes geformt ist.

4. Isolator (4, 4a, 4b) nach einem der Anspräche 1 bis 3,
**dadurch gekennzeichnet dass** der Ring unter Veränderung seines Umfanges elastisch verformbar ist.

5. Isolator (4, 4a, 4b) nach Anspruch 4,
**dadurch gekennzeichnet dass** ein Flanschverstärkungselement (12) außerhalb der vom Ring umgriffenen Zone angeordnet ist.

6. Isolator (4, 4a, 4b) nach einem der Ansprüche 1 bis 5,
**dadurch gekennzeichnet dass** die Potentialausgleichseinrichtung (10) ein Band ist.

7. Isolator (4, 4a, 4b) nach Anspruch 6,
**dadurch gekennzeichnet dass** das Band perforiert, insbesondere ein Netzband ist.

8. Isolator (4, 4a, 4b) nach Anspruch 1 bis 7,
**dadurch gekennzeichnet dass** zumindest ein Flanschverstärkungselement (7, 8, 12) eine Ausnehmung in dem Isolator (4, 4a, 4b) auskleidet.

9. Isolator nach Anspruch 1 bis Anspruch 8,
**dadurch gekennzeichnet dass** zumindest ein Flanschverstärkungselement (7, 8, 12) eine Hülse ist.

10. Isolator (4, 4a, 4b) nach einem der Ansprüche 1 bis 9,
**dadurch gekennzeichnet dass** die Potentialausgleichseinrichtung (10) vollständig in dem Isolator (4, 4a, 4b) eingebettet ist.

11. Isolator nach einem der Ansprüche 1 bis 10,
**dadurch gekennzeichnet dass** die Potentialausgleichseinrichtung (10) über ein Flanschverstärkungselement (7, 8, 12) kontaktierbar ist.

12. Elektroenergieübertragungseinrichtung mit einem Kapselungsgehäuse sowie einer Flanschverbindung (3)
**dadurch gekennzeichnet dass** in der Flanschverbindung (3) ein Isolator (4, 4a, 4b) nach einem der Patentansprüche 1 bis 11 eingespannt ist.

13. Elektroenergieübertragungseinrichtung nach Anspruch 12,
**dadurch gekennzeichnet dass** das Kapselungsgehäuse (1) mit einem elektrisch isolierenden Fluid befüllt ist.

## Claims

1. Insulator (4, 4a, 4b) comprising a flange (6) and comprising a first flange reinforcement element (7), wherein the first flange reinforcement element (7) and a second flange reinforcement element (8) are electrically contact-connected to one another by means of a potential equalization device (10), wherein the potential equalization device (10) has a shielding face, wherein at least one flange reinforcement element (7, 8) is at least partially arranged in the shielding region of the shielding face, **characterized in that** the shielding face is convexly curved and is arranged in the flange (6), wherein the shielding region of the shielding face is arranged on the rear side of the potential equalization device (10), which rear side is averted from the convex side, and the shielding region is produced for a central region of the insulator (4, 4a, 4b), which region is enclosed by the flange (6), and wherein at least one flange reinforcement element (7, 8) is arranged on a rear side, which is averted from the convexly curved face, in the shielding region of the shielding face.

2. Insulator (4, 4a, 4b) according to Claim 1,
**characterized in that**
at least one of the flange reinforcement elements (7, 8) forms a section of a contact face (6a, 6b) of the flange (6).

3. Insulator (4, 4a, 4b) according to either of Claims 1 and 2,
**characterized in that**
the potential equalization device (10) is shaped in the form of a ring.

4. Insulator (4, 4a, 4b) according to one of Claims 1 to 3,
**characterized in that**
the ring can be elastically deformed by changing its circumference.

5. Insulator (4, 4a, 4b) according to Claim 4,
**characterized in that** a flange reinforcement element (12) is arranged outside the zone which is enclosed by the ring.

6. Insulator (4, 4a, 4b) according to one of Claims 1 to 5,
**characterized in that**
the potential equalization device (10) is a strip.

7. Insulator (4, 4a, 4b) according to Claim 6,
**characterized in that**
the strip is perforated, in particular is a net strip.

8. Insulator (4, 4a, 4b) according to Claims 1 to 7,
**characterized in that**
at least one flange reinforcement element (7, 8, 12) lines a recess in the insulator (4, 4a, 4b).

9. Insulator according to Claim 1 to Claim 8,
**characterized in that**
at least one flange reinforcement element (7, 8, 12) is a sleeve.

10. Insulator (4, 4a, 4b) according to one of Claims 1 to 9,
**characterized in that**
the potential equalization device (10) is completely embedded in the insulator (4, 4a, 4b).

11. Insulator according to one of Claims 1 to 10,
**characterized in that**
contact can be made with the potential equalization device (10) by means of a flange reinforcement element (7, 8, 12).

12. Electrical energy transmission device comprising an encapsulation housing and a flange connection (3),
**characterized in that**
an insulator (4, 4a, 4b) according to one of Patent Claims 1 to 11 is clamped in the flange connection (3).

13. Electrical energy transmission device according to Claim 12,
**characterized in that**
the encapsulation housing (1) is filled with an electrically insulating fluid.

## Revendications

1. Isolateur (4, 4a, 4b) comportant une bride (6) ainsi qu'un premier élément (7) de renfort de bride, le premier élément (7) de renfort de bride et un deuxième élément (8) de renfort de bride étant en contact électrique l'un avec l'autre par l'intermédiaire d'un dispositif (10) de compensation de potentiel, le dispositif (10) de compensation de potentiel comportant une face d'écran, au moins un élément (7, 8) de renfort de bride étant disposé au moins partiellement dans la zone d'écran de la face d'écran, **caractérisé en ce que** la face d'écran est incurvée de manière convexe et disposée dans la bride (6), la région d'écran de la face d'écran étant disposée sur la face arrière, éloignée de la face convexe, du dispositif (10) de renfort de potentiel et étant la région d'écran pour une région de l'isolateur (4, 4a, 4b) centrale, entourant la bride (6), et au moins un élément (7, 8) de renfort de bride étant disposé sur une face arrière, éloignée de la face incurvée convexe, dans la région d'écran de la face d'écran.

2. Isolateur (4, 4a, 4b) suivant la revendication 1,
**caractérisé en ce que**
au moins l'un des éléments (7, 8) de renfort de bride forme une partie (6a, 6b) d'application de la bride (6).

3. Isolateur (4, 4a, 4b) suivant l'une des revendications 1 à 2,
**caractérisé en ce que**
le dispositif (10) de compensation de potentiel est formé à la façon d'un anneau.

4. Isolateur (4, 4a, 4b) suivant l'une des revendications 1 à 3,
**caractérisé en ce que**
l'anneau peut être déformé élastiquement par modification de sa circonférence.

5. Isolateur (4, 4a, 4b) suivant la revendication 4,
**caractérisé en ce que**
l'élément (12) de renfort de bride est disposé à l'extérieur de la zone entourant l'anneau.

6. Isolateur (4, 4a, 4b) suivant l'une des revendications 1 à 5,
**caractérisé en ce que**
le dispositif (10) de compensation de potentiel est une bande.

7. Isolateur (4, 4a, 4b) suivant la revendication 6,
**caractérisé en ce que**
la bande est perforée, étant notamment une bande à maille.

8. Isolateur (4, 4a, 4b) suivant la revendication 1 à 7,
**caractérisé en ce que**
au moins un élément (7, 8, 12) de renfort de bride chemise une cavité dans l'isolateur (4, 4a, 4b).

9. Isolateur suivant la revendication 1 à la revendication 8,
**caractérisé en ce que**
au moins un élément (7, 8, 12) de renfort de bride est une douille.

10. Isolateur (4, 4a, 4b) suivant l'une des revendications 1 à 9,
**caractérisé en ce que** le dispositif (10) de compensation de potentiel est totalement enrobé dans l'isolateur (4, 4a, 4b).

11. Isolateur suivant l'une des revendications 1 à 10,
**caractérisé en ce que** le dispositif (10) de compensation de potentiel peut être mis en contact par l'intermédiaire d'un élément (7, 8, 12) de renfort de bride.

12. Dispositif de transfert d'électro-énergie comportant un boîtier d'encapsulation ainsi qu'une liaison (3) par bride,
**caractérisé en ce qu'**
il est serré dans la liaison (3) par bride un isolateur (4, 4a, 4b) suivant l'une des revendications 1 à 11.

13. Dispositif de transfert d'électro-énergie suivant la revendication 12,
**caractérisé en ce que**
le boîtier (1) d'encapsulation est rempli d'un fluide isolant électriquement.
